(19) **Europäisches Patentamt**

**European Patent Office**

**Office européen des brevets**

(11) Publication number: **0 184 320 B1**

# EUROPEAN PATENT SPECIFICATION

(45) Date of publication of patent specification: **19.06.91**

(51) Int. Cl.⁵: **G06F 13/42**

(21) Application number: **85307880.6**

(22) Date of filing: **31.10.85**

(54) Improved performance memory bus architecture.

(30) Priority: **02.11.84 US 667865**

(43) Date of publication of application:
**11.06.86 Bulletin 86/24**

(45) Publication of the grant of the patent:
**19.06.91 Bulletin 91/25**

(84) Designated Contracting States:
**DE FR GB IT NL SE**

(56) References cited:
**DE-A- 3 007 939**
**US-A- 4 240 138**
**US-A- 4 464 715**

**COMPUTER DESIGN, vol. 21, no. 1, January 1982, pages 155-156,160,162,164, Winchester, Mass., US; J.P. ALTNETHER: "Better processor performance via global memory"**

**MICROPROCESSORS AND MICROSYSTEMS, vol. 6, no. 9, November 1982, pages 471-474, Butterworth & Co. (Publishers) Ltd., Whitstable, Kent, GB; R. BOBERG: "Major standardization issues of the proposed IEEE 796 bus - multibus"**

**CONFERENCE PROCEEDINGS-10TH ANNUAL**

**INTERNATIONAL SYMPOSIUM ON COMPUTER ARCHITECTURE, 1983, Royal Institute of Technology, Stockholm, SE, pages 334-340, ACM, New York, US; L. PHILIPSON et al.: "A communication structure for a multiprocessor computer with distributed global memory"**

(73) Proprietor: **MEASUREX CORPORATION**
**One Results Way**
**Cupertino, California 95014(US)**

(72) Inventor: **Stinson, Gene Ray**
**277 Casitas Boulevard**
**Los Gatos California 95030(US)**
Inventor: **Jedda, Maximilian Paul**
**1381 Fisherhawk Drive**
**Sunnyvale California 95014(US)**
Inventor: **Williams, Anna Stockel**
**1158 Sunnyvale-Saratoga Road 67**
**Sunnyvale California 94087(US)**

(74) Representative: **Atkinson, Peter Birch et al**
**MARKS & CLERK Suite 301 Sunlight House**
**Quay Street**
**Manchester M3 3JY(GB)**

## Description

This invention relates to an electronic microprocessor system, and in particular to an improved performance memory bus architecture for a microprocessor system.

In the field of microprocessors, it is common to have various portions of a microprocessor-based system (such as the microprocessor itself, memory units, and interface circuits for coupling the system to storage units and communications circuits) interconnected by means of one or more communications busses. The prior art teaches various combinations of bus architectures, including separate buses for data, address, and control information. However, many microprocessor-based systems use a single integrated bus for data, address, and control information. For example, the Intel Corporation has developed a unified bus architecture known by the trademark "Multibus" for microprocessor system communication.

One problem with such a standard unified bus architecture is that in certain applications where processing speed is of paramount importance (such as in real-time data processing applications), the unified bus architecture is too slow when fast data transfer between memory and the system microprocessor is desired. The problem arises because the unified bus architecture requires a certain protocol for reading and writing data from or to memory, which utilizes an undue amount of time in acknowledging signals from the microprocessor. However, retaining a standard unified bus within the system is advantageous, in that it allows standard circuits and interfaces to be coupled to the microprocessor system.

In "Computer Design" Volume 21 (1982) January No. 1 a system is described which joins global and local memories and eliminates wait states in the transfer of data between addressable memory and the system microprocessor. It employs a local memory bus and a global bus. A bus controller is used to generate advanced READ AND WRITE commands by outputting status bits ahead of enabling the address latch. The status bits are decoded and the advanced READ AND WRITE command is generated and sent to the addressable memory. The addressable memory in turn generates a quick response upon receipt of the commands.

"Microprocessors and Microsystems" Volume 6 (1982) November discusses the development of the IEEE 796 bus standard ("Multibus" - trademark). The bus features an advanced acknowledge signal returnable from the addressable memory one CPU cycle before the data is ready.

US Patent 4464715 discloses a memory accessing method used with the "Multibus". It is concerned with collisions between a memory access cycle e.g. a read cycle and a memory refresh cycle required for dynamic memory. Any memory access cycle is aborted in favour of a refresh cycle. The memory provides an advanced acknowledge signal on a separate line to indicate that memory is being accessed without collision with a refresh cycle.

It is an object of the present invention to achieve an improved performance in a microprocessor system having a standard unified bus.

According to the present invention there is provided a microprocessor system comprising a microprocessor having status information output indicative of an impending read or write operation and further generating standard read and write commands;

a unified standard bus coupled to the microprocessor and to at least one external source of command information, including standard read and write commands;

a memory bus coupled to the microprocessor;

a first detection circuit coupled to the microprocessor and to the memory bus for receiving the status information, generating an early command signal in response to the status information and indicative of a read or write operation, and transmitting that early command signal by means of the memory bus prior to the generation of the corresponding standard command;

an addressable memory, coupled to the memory bus, including means for receiving read and write command signals and means for performing read and write operations in response to received read and write command signals, means for generating an acknowledgement signal in response to a received read or write command signal prior to the completion of the command read or write operation, and means for transmitting the acknowledgement signal by means of the memory bus to the microprocessor, whereby the microprocessor, upon receipt of the acknowledgement signal, is enabled to output further status information indicative of a next impending read or write operation;

a second detection circuit coupled to the microprocessor, the unified standard bus, and the first detection circuit for receiving command information over the unified standard bus indicative of a conflict between the microprocessor and an external source of command information with respect to control of the unified standard bus and for generating a control signal for preventing the first detection circuit from supplying an early command signal to the addressable memory; and

means to electrically couple the unified standard bus to the memory bus, and wherein, in response to the control signal from the second detection circuit, the assembly is enabled to be directly responsive to standard read and write commands from and external source of command information for reading or writing data by means of the memory bus to or from the unified standard bus.

A embodiment of the present invention will now be described, by way of example, with reference to the accompanying drawings, in which:

FIGURE 1 is a block diagram of a microcomputer utilizing the improved performance memory bus architecture of the present invention.

FIGURE 2a is a timing diagram of a typical unified bus READ operation.

FIGURE 2b is a timing diagram of a typical unified bus WRITE operation.

FIGURE 3a is a timing diagram of the READ operation on the memory bus of the present invention.

FIGURE 3b is a timing diagram of the WRITE operation on the memory bus of the present invention.

FIGURE 4 is a schematic diagram of the Early READ/WRITE circuit of the present invention.

Like reference numbers in the various drawings refer to like elements.

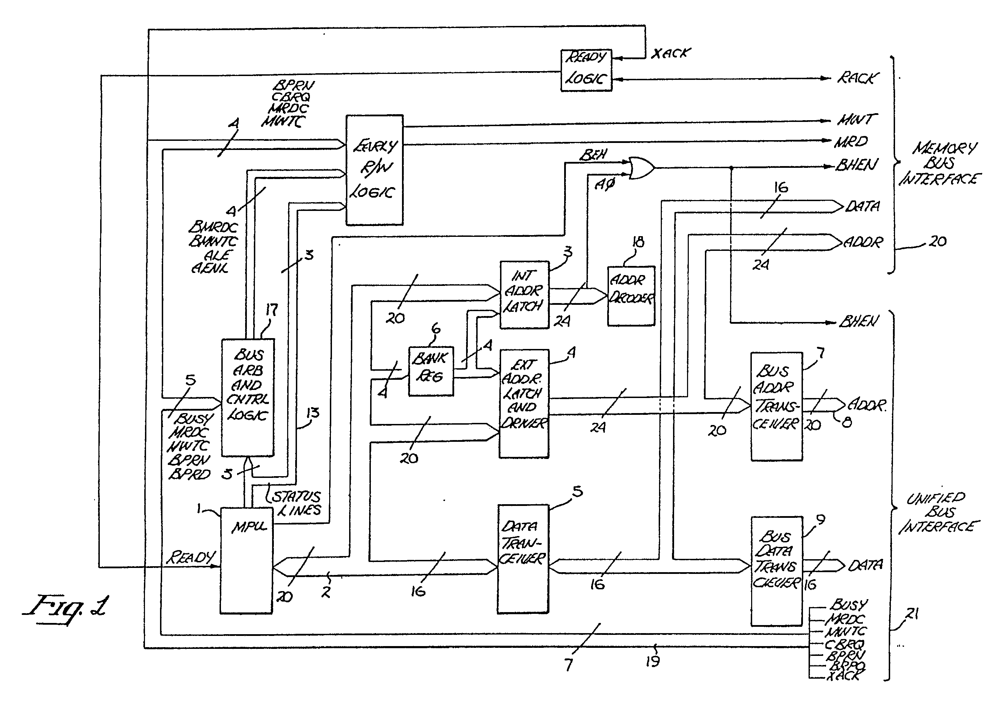

The circuitry shown in FIGURE 1 comprises a basic microprocessor-based system that can be coupled to a unified bus and to the inventive memory bus through physical interface connections (not shown) to which are connected address, data, and control lines, as further described below. Only the microprocessor board itself and one or more memory banks can be connected through the memory bus. In the present embodiment, the memory bus uses a 24-bit addressing scheme where the four most significant bits have been designated the "bank" address. These four bits are used to select one of fifteen memory banks, which may be selected one at a time by the appropriate bank address. A sixteenth bank address (denoted by the hexidecimal number "F") is reserved as memory accessible only over the unified bus connected to the microprocessor circuit board.

FIGURE 1 is a block diagram of the improved performance memory bus architecture of the preferred embodiment of the present invention. The microprocessor 1 is coupled by means of a bidirectional local address/data bus 2 to an internal address latch 3, to an external address latch and driver 4, to a bidirectional data transceiver 5, and to a bank register circuit 6 (each number within the busses throughout FIGURE 1 designate the width of the bus at that point).

The external address latch 4 has twenty-four lines of address output. Twenty of these address lines are derived directly from the microprocessor 1, and the remaining four address lines are derived from the bank register circuit 6. Twenty of these twenty-four address lines from the external address latch 4 are coupled by an address bus 22 to a unified bus address transceiver 7, which in turn is coupled to the address lines 8 of a standard unified bus interface 21. All twenty-four address lines of the address bus 22 coming from the external address latch 4 are coupled to an inventive memory bus interface 20.

The bidirectional data transceiver 5 transmits or receives up to sixteen simultaneous bits of information. The data transceiver 5 is coupled by a data bus 11 to a unified bus data transceiver 9, which in turn is coupled to the data lines 10 of the unified bus interface 21. The output of the data transceiver 5 is also coupled to the inventive memory bus interface 20 through the data bus 11.

In the present embodiment, the 16-bit wide data path of the memory bus may be used for 8-bit or 16-bit transfers in known fashion.

The microprocessor 1 also has three status lines 13 that are connected to an Early READ/WRITE logic circuit 12 and to a unified bus arbitration and control circuit 17 (which may be, for example, an Intel Corporation 8288 bus control circuit in combination with an 8289 bus arbitration circuit). Control lines 19 (further described below) from the unified bus interface 21 connect to the arbitration and control circuit 17, and to the Early READ/WRITE logic circuit 12. Other control lines (further described below) from the arbitration and control circuit 17 are also connected to the Early READ/WRITE logic circuit 12.

Typically, connections from the unified bus interface 21 to the memory bus interface 20 are through intermediate buffer circuits or transceivers that can be tristated if desired in accordance with known art. One signal line from the unified bus interface 21 is always physically connected to a corresponding signal line on the memory bus interface 20. This is the Byte High Enable signal line, BHEN, 16.

Other connections between the various circuit elements are shown in FIGURE 1. Omitted for the sake of clarity are such items as clocking signals, power and ground, and tristate enable control lines, which may be in accordance with known art.

By implementing a second bus in the microcomputer system for interconnection of the microprocessor 1 with the system memory, performance is enhanced by permitting a modified READ/WRITE protocol to be used over the memory bus that is faster in operation than the protocol required by the standard unified bus. In addition, early detection of an impending READ or WRITE operation generally permits faster commencement of such operations in comparison with the standard protocol of such a unified bus.

FIGURES 2a and 2b show generalized timing diagrams of the protocols for a READ operation and a WRITE operation for a prior art unified bus. In both the READ and WRITE operations, after a READ or WRITE command is asserted by the bus master, an XACK acknowledgement signal from the memory unit is asserted after the memory unit has completed its READ or WRITE cycle. This delay in asserting the XACK acknowledgment signal is eliminated by the present invention, and is one of the main advantages of the present invention.

In use, the improved memory bus architecture of the present invention permits two different types of memory operation: normal operation and direct memory access ("DMA") operations. Under normal operation, the microprocessor 1 is the "bus master", which controls the standard unified bus in known fashion until such time as another "bus master" subsystem requests control of the unified bus. When another subsystem does become bus master of the unified bus, the microprocessor 1 gives up control of the unified bus and opens a direct electrical channel between the unified bus interface 21 and the memory bus interface 20. This is the second mode of operation, the DMA condition. The microprocessor cannot access the system memory during this time, and must wait until the current bus master releases the unified bus and the microprocessor 1 again becomes the bus master of the unified bus.

During normal operation, the microprocessor 1 can control both the memory bus and the unified bus. The microprocessor 1 may access either bus at any time without further arbitration to gain control over either bus.

In the present invention, a READ or WRITE operation over the memory bus using the inventive protocol begins when a new address is latched into the external address latch 4 and is asserted over the address bus 11. Decoding circuitry in each memory bank coupled to the memory bus interface 20 immediately decodes this address to determine if the microprocessor 1 is selecting that memory bank for access. The status of the microprocessor 1 is determined by the Early READ/WRITE logic circuit 12 which decodes the status line 13 outputs of the microprocessor 1 to determine if the microprocessor 1 is reading or writing to memory. Depending on the status signals received from the microprocessor 1, the Early READ/WRITE logic circuit 12 will generate either a memory write (MWT) signal 14 or a memory read (MRD) signal 15, and apply it to the memory bus interface 20.

During a normal memory operation (either READ or WRITE), a Byte High Enable signal, BHEN 16, is generated as a combination of the zero address line output, AO, from internal address latch 3, and a control signal, BHE, generated in known fashion by the microprocessor 1. The BHEN signal 16 need be asserted only by the time an MRD or MWT signal has been applied to the memory bus interface 20.

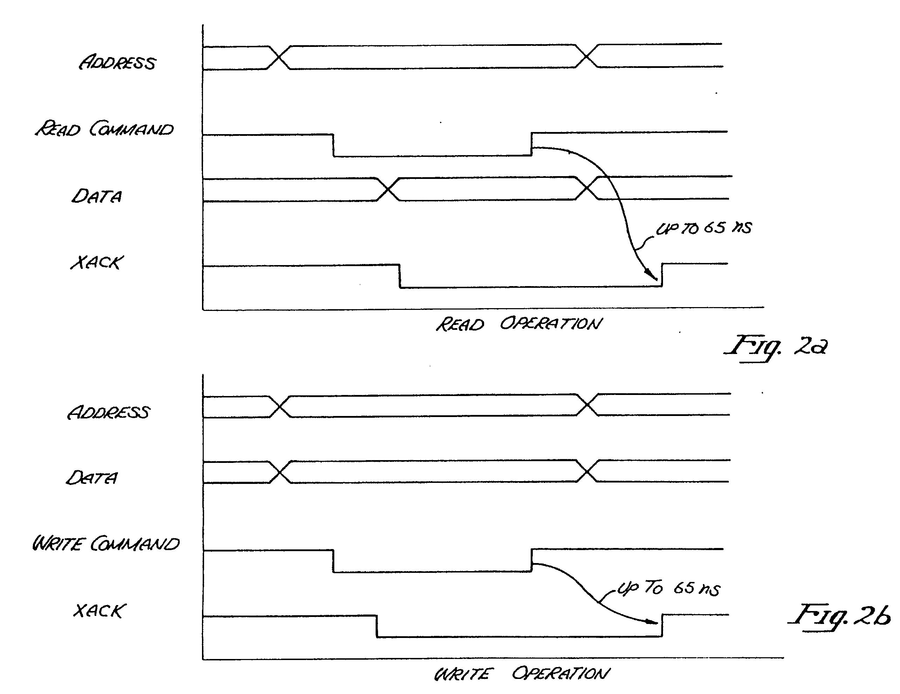

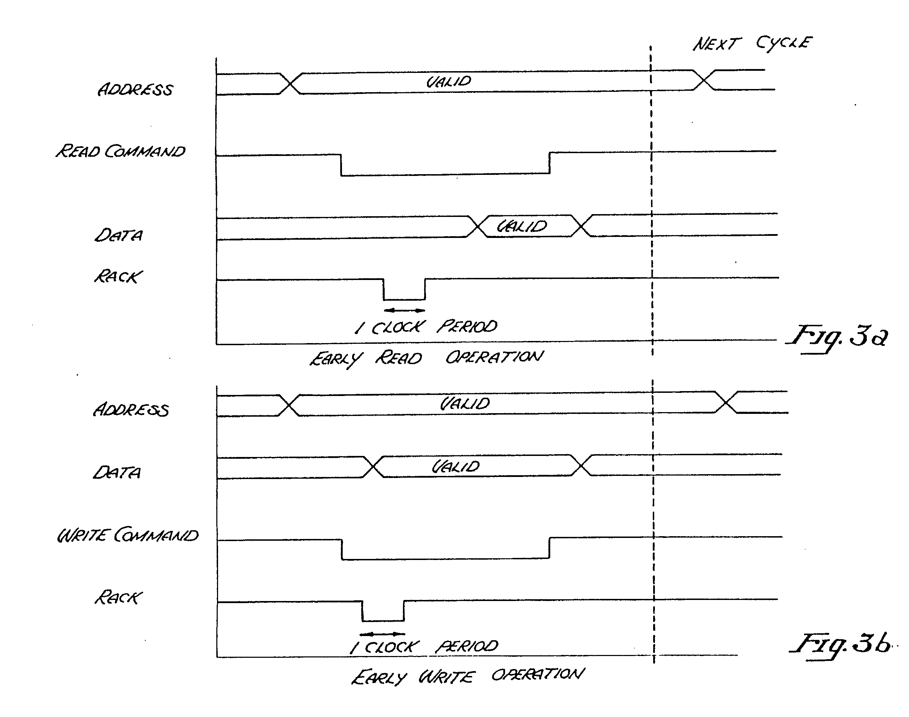

When a memory bank receives an appropriate address, the BHEN signal, and an MRD or MWT command, the memory bank responds back over the memory bus interface 20 with a RAM acknowledgement signal, RACK, to signal the microprocessor 1 that the memory bank will be ready to complete the READ or WRITE cycle. The RACK signal is synchronized with the microprocessor 1 system clock, which is also provided to the memory bus. Utilizing the master clock signal from the microprocessor circuit board, the selected memory bank operates synchronously with the microprocessor. This ensures maximum throughput during READ or WRITE operations. The RAM acknowledgment signal, RACK, is only asserted long enough to be recognized by the microprocessor 1, which in the preferred embodiment is approximately 125 nanoseconds, or one clock period, and thus is asserted shortly after the MRD or MWT command line is asserted, as shown in FIGURES 3a and 3b. As noted previously, in the standard unified bus protocol, the XACK acknowledgment signal is not asserted until after a READ or WRITE operation has been completed. Thus, with the improved memory bus of the present invention, the microprocessor 1 receives an early acknowledgment that the READ or WRITE operation has commenced. That is, the RACK signal is generated a fixed time prior to the completion of the READ or WRITE operation. Therefore the microprocessor 1 can be (and is) programmed to respond on the assumption that the operation will finish, and thus the next cycle can be started. This anticipation typically saves one or two time periods, or "wait" states, compared to the prior art.

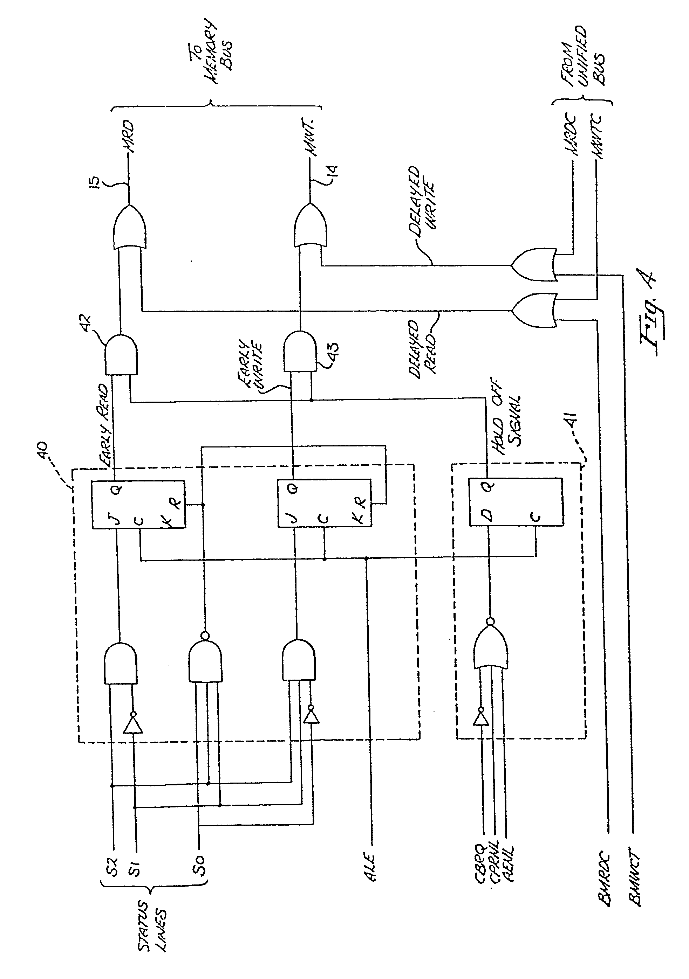

One of the primary advantages of the inventive memory bus is the generation of early MRD and MWT signals. The Early READ/WRITE logic circuit 12, shown in FIGURE 4, essentially is simple, combinatorial logic that very rapidly decodes the value of the status line 13 from the microprocessor 1 to generate Early READ or Early WRITE signals immediately after the status lines are valid. The logic elements in the area marked 40 generate the Early READ and Early WRITE signals. These signals are respectively logically OR'd with the standard READ command, BMRDC, and WRITE command, BMWCT, generated by the arbitration and control circuit 17 in known fashion.

The generation of an Early READ signal is typically 100 nanoseconds before the arbitration and control circuit 17 asserts the standard BMRDC signal for a READ operation (called a "Delayed READ"). The generation of an Early WRITE signal is typically 160 nanoseconds before the assertion of the standard BMWCT signal for a WRITE operation (called a "Delayed WRITE"). The Early READ and Early WRITE signals save one clock period per memory bus cycle, which results in a 17% to 25% decrease in the time it takes to complete one memory bus cycle compared to cycles where a Delayed READ or Delayed WRITE signal is generated by the arbitration and control circuit 17.

An exception to the normal operation sequence occurs when either the microprocessor 1 is not master of the unified bus, or another subsystem coupled to the unified bus is requesting that it be made master of the unified bus near the commencement of a READ or WRITE operation. In such a case, the arbitration and control circuit 17 cannot guarantee that the microprocessor 1 is the bus master until after an Early READ or Early WRITE signal normally would have been asserted. Therefore, the Early READ/WRITE logic circuit 12 is designed to detect such arbitration conflicts.

The logic elements in the area in FIGURE 4 marked 41, when enabled by a standard AENL signal generated by the arbitration and control circuit 17, monitors two of the standard unified bus arbitration and control signals, the common bus request, CBRQ, and the bus priority input signal, BPRNL. The AENL signal indicates that another subsystem is the bus master. The CBRQ signal indicates that another subsystem is requesting mastership of the unified bus. The BPRNL signal indicates whether a requesting subsystem has a higher priority than the present bus master. These later two signals are sampled along with the status lines near the start of every memory bus cycle, when the address latch signal, ALE, generated by the arbitration and bus controller circuit 17 is asserted. If either CBRQ or BPRN are asserted at this time, a HOLD-OFF signal is generated by the logic elements in the area marked 41 in FIGURE 4, which disables AND gates 42 and 43 and prevents the assertion of the Early READ or Early WRITE signals to the memory bus interface 20. If the arbitration and control circuit 17 resolves the bus mastership in favor of the microprocesser 1, the standard BMRDC or BMWCT signal from the arbitration and control circuit 17 is asserted through the Early READ/WRITE circuitry 12 to generate the respective MRD or MWT signal to the memory. If bus mastership is not resolved in favor of the microprocesser 1 during such a situation, then the DMA condition prevails.

During the DMA condition, all of the address and data signals of the unified bus are passed to the inventive memory bus, along with the several control signals. The address lines 8 of the unified bus interface 21 are therefore coupled through the address transciever 7 to twenty of the twenty-four address lines of the memory bus interface 20. (In some embodiments of the present invention, the address lines may be inverted first). The data lines 10 of the unified bus interface 21 are coupled through the unified bus data transciever 9 to the memory bus interface 20.

The READ/WRITE command signals (MRDC and MWTD, respectively) from the unified bus are applied to the Early READ/WRITE logic circuit 12. The MRDC and MWTC commands from the unified bus are logically OR'd with the BMRDC and BMWTC signal lines, respectively, from the arbitration and control circuit 17, to also produce a Delayed READ or Delayed WRITE signal, which are then logically OR'd with the Early READ and Early WRITE signals to generate either the memory read signal, MRD 15, or the memory write signal, MWT 14, to the memory bus interface 20. Thereafter, the XACK acknowledgment signal and the standard unified bus protocol are used rather than the RACK acknowledgment signal protocol of the present invention. The timing of address, data, and control signals over the memory bus adheres to the unified bus protocol.

## Claims

1. A microprocessor system comprising:

    a. a microprocessor (1) having status information (13) output indicative of an impending read or write operation and further generating standard read and write commands;

    b. a unified standard bus( 21) coupled to the microprocessor (1) and to at least one external source of command information, including standard read and write commands;

    c. a memory bus (20) coupled to the microprocessor (1);

    d. a first detection circuit (12) coupled to the microprocessor (1) and to the memory bus (20) for receiving the status information (13), generating an early command signal (MWT, MRD) in response to the status information (13) and indicative of a read or write operation, and transmitting that early command signal (MWT, MRD) by means of the memory bus (20) prior to the generation of the corresponding standard command;

    e. an addressable memory, coupled to the memory bus (20), including means for receiving read and write command signals and means for performing read and write operations in response to received read and write command signals, means for generating an acknowledgement signal (RACK) in response to a received read or write command signal prior to the completion of the command read or write operation, and means for transmitting the acknowledgement signal (RACK) by means of the memory bus (20) to the microprocessor (1), whereby the microprocessor (1), upon receipt of the acknowledgement signal (RACK), is enabled to output further status information (13) indicative of a next impending read or write operation;

f. a second detection circuit coupled (17) to the microprocessor (1), the unified standard bus (21), and the first detection circuit (12) for receiving command information over the unified standard bus (21) indicative of a conflict between the microprocessor (1) and an external source of command information with respect to control of the unified standard bus (21) and for generating a control signal (HOLD-OFF) for preventing the first detection circuit (12) from supplying an early command signal (MWT. MRD) to the addressable memory; and

g. means to electrically couple the unified standard bus (21) to the memory bus (20), and wherein, in response to the control signal from the second detection circuit (17), the addressable memory is enabled to be directly responsive to standard read and write commands from the external source of command information for reading or writing data by means of the memory bus (20) to or from the unified standard bus (21).

## Revendications

1. Système à microprocesseur comprenant:

   a. un microprocesseur (1) ayant une sortie d'informations (13) d'état indicant une opération imminente de lecture ou d'écriture et générant en outre des commandes standard de lecture et d'écriture;

   b. un bus (21) standard unifié couplé au microprocesseur (1) et à au moins une source externe d'informations de commande, comprenant des commandes standards de lecture et d'écriture;

   c. un bus (20) de mémoire couplé au microprocesseur (1);

   d. un premier circuit (12) de détection couplé au microprocesseur (1) et au bus (20) de mémoire pour recevoir les informations (13) d'état, pour générer un signal de commande précoce (MWT - écriture de mémoire, MRD - lecture de mémoire) en réponse aux informations (13) d'état et indicant une opération de lecture ou d'écriture, et pour transmettre ce signal de commande (MWT, MRD) précoce au moyen du bus (20) de mémoire avant la génération de la commande standard correspondante;

   e. une mémoire adressable, couplée au bus (20) de mémoire, comprenant un moyen pour recevoir des signaux de commande de lecture et d'écriture et un moyen pour effectuer des opérations de lecture et d'écriture en réponse aux signaux reçus de commande de lecture et d'écriture, un moyen pour générer un signal d'accusé de réception (RACK) en réponse à un signal reçu de commande de lecture ou d'écriture avant l'achèvement de l'opération de commande de lecture ou d'écriture, et un moyen pour transmettre le signal d'accusé de réception (RACK) au moyen du bus (20) de mémoire au microprocesseur (1), grâce à quoi le microprocesseur (1), lors de la réception du signal d'accusé de réception (RACK), est autorisé à sortir d'autres informations (13) d'état indicant une prochaine opération imminente de lecture ou d'écriture;

   f. un second circuit (17) de détection couplé au microprocesseur (1), au bus (21) standard unifié, et au premier circuit (12) de détection pour recevoir des informations de commande sur le bus (21) standard unifié indicant un conflit entre le microprocesseur (1) et une source externe d'informations de commande par rapport au contrôle du bus (21) unifié standard et destiné à générer un signal de contrôle (HOLD OFF - BLOCAGE) pour empêcher le premier circuit (12) de détection de fournir un signal de commande précoce (MWT, MRD) à la mémoire adressable; et

   g. un moyen pour coupler de manière électrique le bus (21) standard unifié au bus (20) de mémoire, et dans lequel, en réponse au signal de contrôle en provenance du second circuit (17) de détection, la mémoire adressable est autorisée à être directement sensible aux commandes de lecture et d'écriture standard provenant de la source externe d'informations de commande pour lire le bus (21) standard unifié ou écrire dans celui-là des données au moyen du bus (20) de mémoire.

## Ansprüche

1. Mikroprozessoranlage, umfassend:

   a) Einen Mikroprozessor (1) mit einer Ausgabe einer auf einen bevorstehenden Lese- oder Schreibvorgang hinweisenden Zustandsinformation (13), und der ferner Lese- und Schreib-Standardbefehle erzeugt;

   (b) einen vereinheitlichten, mit dem Mikroprozessor (1) und mindestens einer externen Befehlsinformationsquelle gekoppelten Standardbus (21), der Lese- und Schreib-Standardbefehle umfaßt;

(c) einen mit dem Mikroprozessor (1) gekoppelten Speicherbus (20);

(d) eine erste mit dem Mikroprozessor (1) und dem Speicherbus (20) gekoppelte Auswerteschaltung (12) zum Empfang der Zustandsinformation (13), zum Erzeugen eines Frühbefehlsignals (MWT [Speicherschreibsignal], MRD [Speicherlesesignal]) als Reaktion auf die Zustandsinformation (13) und hinweisend auf einen Lese- oder Schreibvorgang, und zum Übermitteln des Frühbefehlsignals (MWT, MRD) über den Speicherbus (20) vor der Erzeugung des entsprechenden Standardbefehls;

(e) einen aufrufbaren, mit dem Speicherbus (20) gekoppelten Speicher, umfassend eine Einrichtung zum Empfang von Lese- und Schreibbefehlsignalen sowie eine Einrichtung zur Ausführung von Lese- und Schreibvorgängen als Reaktion auf empfangene Lese- und Schreibbefehlsignale, eine Einrichtung zur Erzeugung eines Bestätigungssignals (RACK [RAM-Bestätigungssignal]) als Reaktion auf ein empfangenes Lese- oder Schreibbefehlsignal vor dem Abschluß des Lese- oder Schreibbefehlvorgangs, und eine Einrichtung zur Übermittlung des Bestätigungssignals (RACK) zum Mikroprozessor (1) über den Speicherbus (20), wodurch dem Mikroprozessor (1) bei Empfang des Bestätigungssignals (RACK) die Ausgabe weiterer, auf einen nächsten bevorstehenden Lese- oder Schreibvorgang hinweisende Zustandsinformation (13) ermöglicht wird;

(f) eine zweite, mit dem Mikroprozessor (1), dem vereinheitlichtenStandardbus (21) und der ersten Auswerteschaltung (12) gekoppelte (17) Auswerteschaltung zum Empfang von Befehlsinformation über den vereinheitlichten Standardbus (21), die in bezug auf die Steuerung des vereinheitlichten Standardbusses (21) auf einen Konflikt zwischen dem Mikroprozessor (1) und einer externen Befehlsinformationsquelle hinweist, und zur Erzeugung eines Steuersignals (HOLD-OFF [ABHALTEN]), um die erste Auswerteschaltung (12) davon abzuhalten, ein Frühbefehlsignal (MWT, MRD) an den aufrufbaren Speicher weiterzugeben; und

(g) eine Einrichtung zur elektrischen Kopplung des vereinheitlichten Standardbusses (21) mit dem Speicherbus (20), und wobei es dem aufrufbaren Speicher als Reaktion auf das von der zweiten Auswerteschaltung (17) kommende Steuersignal ermöglicht wird, direkt auf von der externen Befehlsinformationsquelle kommende Lese- und Schreib-Standardbefehle zum Lesen bzw. Schreiben von Daten über den Speicherbus (20) an den bzw. vom vereinheitlichten Standardbus (21) zu reagieren.

Fig. 1

ADDRESS

READ COMMAND

DATA

XACK

UP TO 65 nS

READ OPERATION

Fig. 2a

ADDRESS

DATA

WRITE COMMAND

XACK

Up To 65 nS

WRITE OPERATION

Fig. 2b

EP 0 184 320 B1

NEXT CYCLE

ADDRESS — VALID

READ COMMAND

DATA — VALID

RACK

1 CLOCK PERIOD

EARLY READ OPERATION

Fig. 3a

ADDRESS — VALID

DATA — VALID

WRITE COMMAND

RACK

1 CLOCK PERIOD

EARLY WRITE OPERATION

Fig. 3b

EP 0 184 320 B1

Fig. 4